# EUROPÄISCHE PATENTSCHRIFT

(11) **EP 2 670 988 B1**
(45) Veröffentlichungstag und Bekanntmachung des Hinweises auf die Patenterteilung: **07.10.2015**
(21) Anmeldenummer: 12708757.5
(22) Anmeldetag: 30.01.2012
(51) Int. Cl.: F16B 2/24

(54) **BEFESTIGUNGSVORRICHTUNG**
FASTENING DEVICE
DISPOSITIF DE FIXATION

(30) Priorität: 02.02.2011 DE 102011010141; 26.05.2011 DE 202011101112 U
(43) Veröffentlichungstag der Anmeldung: 11.12.2013
(73) Patentinhaber: A. RAYMOND et Cie, 38000 Grenoble (FR)
(72) Erfinder: BINKERT, Sven, 79774 Albbruck (DE)
(74) Vertreter: RACKETTE Patentanwälte PartG mbB
(86) Internationale Anmeldenummer: PCT/EP2012/051445
(87) Internationale Veröffentlichungsnummer: WO 2012/104250

(56) Entgegenhaltungen:
- WO-A1-2010/101803

## Beschreibung

Die Erfindung betrifft eine Befestigungsvorrichtung gemäß dem Oberbegriff des Patentanspruches 1.

Eine derartige Befestigungsvorrichtung ist aus WO 2010/101803 A1 bekannt. Die vorbekannte Befestigungsvorrichtung zum Befestigen eines Anbauteiles an einem Trägerteil weist eine in einem Kopfbereich angeordnete flache Deckplatte und zwei Schaftarme auf, die mit der Deckplatte verbunden sind und die sich von der Deckplatte weg in Richtung eines Fußbereiches erstrecken. Jeder Schaftarm verfügt über einen Außenflügel und über einen Innenflügel, wobei an jedem Innenflügel eines Schaftarmes durch in dem Außenflügel des betreffenden Schaftarmes ausgebildete Abstützwangenausnehmungen durchgreifende Abstützwangen angeformt sind. Weiterhin sind an jedem Außenflügel jedes Schaftarmes zwei Randflügel angeformt, die sich aufeinander zu erstrecken. Die Randflügel sind zwischen den Abstützwangen und der Deckplatte positioniert.

Der Erfindung liegt die Aufgabe zugrunde, eine Befestigungsvorrichtung der eingangs genannten Art anzugeben, die sich durch sehr hohe Auszugskräfte und eine hohe Steifigkeit auszeichnet.

Diese Aufgabe wird bei einer Befestigungsvorrichtung der eingangs genannten Art erfindungsgemäß mit den kennzeichnenden Merkmalen des Patentanspruches 1 gelöst.

Dadurch, dass an der Deckplatte Seitenwände angeformt sind, die mit der Deckplatte ein U-förmiges Profil bilden, und dass sich die Außenflügel beidseitig der Abstützwangenfreimachungen erstrecken, ergibt sich eine sehr hohe Steifigkeit der Befestigungsvorrichtung, die durch mehrfache U-Profilierungen zu hohen Auszugskräften führt.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung von Ausführungsbeispielen mit Bezug auf die Figuren der Zeichnung.

Es zeigen:
- Fig. 1: in einer perspektivischen Ansicht ein Ausführungsbeispiel einer erfindungsgemäßen Befestigungsvorrichtung,
- Fig. 2: in einer perspektivischen teilgeschnittenen Ansicht das Ausführungsbeispiel gemäß Fig. 1,
- Fig. 3: in einer perspektivischen Detailansicht Abstützwangen des Ausführungsbeispieles gemäß Fig. 1,
- Fig. 4: in einer perspektivischen Detailansicht das Ausführungsbeispiel gemäß Fig. 1 mit aneinander anliegenden freien Enden von Innenflügeln von Abstützwangen,
- Fig. 5: in einer perspektivischen Ansicht das Ausführungsbeispiel gemäß Fig. 1 in einer Einbausituation,
- Fig. 6: in einer Schnittansicht das Ausführungsbeispiel gemäß Fig. 1 in der Einbausituation gemäß Fig. 5,
- Fig. 7: in einer perspektivischen Ansicht ein weiteres Ausführungsbeispiel einer erfindungsgemäßen Vorrichtung,
- Fig. 8: in einer perspektivischen teilgeschnittenen Ansicht das weitere Ausführungsbeispiel gemäß Fig. 7,
- Fig. 9: in einer perspektivischen Detailansicht das weitere Ausführungsbeispiel gemäß Fig. 7 mit aneinander anliegenden Mittenabschnitten von Innenflügeln von Abstützwangen,
- Fig. 10: in einer perspektivischen Detailansicht entsprechend Fig. 3 Abstützwangen eines weiteren Ausführungsbeispieles und
- Fig. 11: in einer perspektivischen Detailansicht entsprechend Fig. 3 Abstützwangen noch eines weiteren Ausführungsbeispieles.

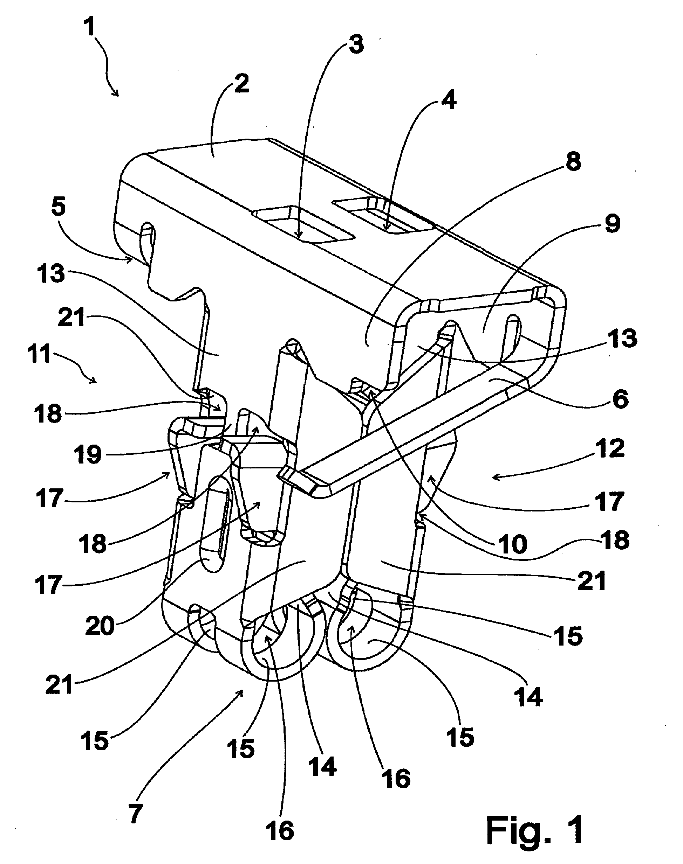

Fig. 1 zeigt in einer perspektivischen Ansicht ein aus einem Metallblech mit einem Stanz-Biege-Prozess hergestelltes Ausführungsbeispiel einer erfindungsgemäßen Befestigungsvorrichtung. Das Ausführungsbeispiel gemäß Fig. 1 verfügt in einem Kopfbereich 1 über eine flache Deckplatte 2 von einer im Wesentlichen rechteckigen Gestalt. In Längsrichtung in Mitte der Deckplatte 2 sind im Bereich der Randseiten einander gegenüberliegende Zugriffsausnehmungen 3, 4 ausgebildet. An den Enden der Deckplatte 2 sind Federarme 5, 6 an die Deckplatte 2 angeformt, die sich von der Deckplatte 2 weg in Richtung eines dem Kopfbereich 1 gegenüberliegenden Fußbereichs 7 erstrecken. Bei dem dargestellten Ausführungsbeispiel sind die Federarme 5, 6 quer zur Längsrichtung der Deckplatte 2 ausgerichtet und verlaufen gegenüber der dem Fußbereich 7 zugewandten Seite der Deckplatte 2.

An den Längsrändern der Deckplatte 2 sind Seitenwände 8, 9 angeformt, die im Wesentlichen rechtwinklig zu der Deckplatte 2 ausgerichtet sind und somit zusammen mit der Deckplatte 2 ein U-förmiges Profil bilden und im Kopfbereich 1 zu einer hohen Steifigkeit führen. Jede Seitenwand 8, 9 ist an ihrem einem Federarm 5, 6 gegenüberliegenden Ende mit einer Federarmaufnahmeausnehmung 10 ausgebildet, die so dimensioniert ist, dass bei einer im Wesentlichen parallelen eingefederten Ausrichtung eines Federarmes 5, 6 zu der Deckplatte 2 dieser formschlüssig in der betreffenden Federarmaufnahmeausnehmung 10 angeordnet ist, während die Federarme 5, 6 in relaxierter Anordnung gemäß Fig. 1 über die Seitenwände 8, 9 in Richtung des Fußbereiches 7 überstehen.

Im Mittenbereich der Seitenwände 8, 9 sind zwei sich von dem Kopfbereich 1 in Richtung des Fußbereiches 7 erstreckende, einander gegenüberliegende Schaftarme 11, 12 angeformt, die jeweils einen an eine Seitenwand 8, 9 angesetzten, außenseitig angeordneten Außenflügel 13 und einen Innenflügel 14 aufweisen, die über im Fußbereich 7 angeordnete Paare von Umbiegeabschnitten 15, die jeweils eine Umbiegefreimachung 16 umschließen, mit den Außenflügeln 13 verbunden und zwischen den Außenflügeln 13 einander gegenüberliegend innenseitig angeordnet sind. Durch die Breite der Umbiegeabschnitte 15 lassen sich die Federeigenschaften der Innenflügel 14 relativ leicht einstellen.

An jedem Innenflügel 14 ist ein Paar von Abstützwangen 17 angeformt, die sich in der in Fig. 1 dargestellten relaxierten Anordnung durch im Mittenbereich in die Außenflügel 13 eingebrachte Abstützwangenfreimachungen 18 über die Außenflügel 13 hinaus nach außen erstrecken. Zwischen den Abstützwangenfreimachungen 18 eines Außenflügels 13 verbleibt ein Mittensteg 19, in dessen Flucht jeweils eine Versteifungssicke 20 zum Versteifen des betreffenden Außenflügels 13 eingeformt ist.

Weiterhin lässt sich der Darstellung gemäß Fig. 1 entnehmen, dass bei diesem Ausführungsbeispiel an die Außenflügel 13 jedes Schaftarmes 11, 12 Randflügel 21 angeformt sind, die sich in Richtung des direkt gegenüberliegenden Randflügels 21 des anderen Außenflügels 13 erstrecken. Die Randflügel 21 erstrecken sich beidseitig der Abstützwangenfreimachungen 18 im Wesentlichen über die gesamte Länge der Außenflügel 13 der Schaftarme 11, 12 und liegen mit ihren aufeinander zuweisenden, bei dem Ausführungsbeispiel gemäß Fig. 1 geraden Randkanten unmittelbar benachbart einander gegenüber. Dadurch sind die Außenflügel 13 gegen ein Einfedern nach Innen blockiert und blockartig versteift.

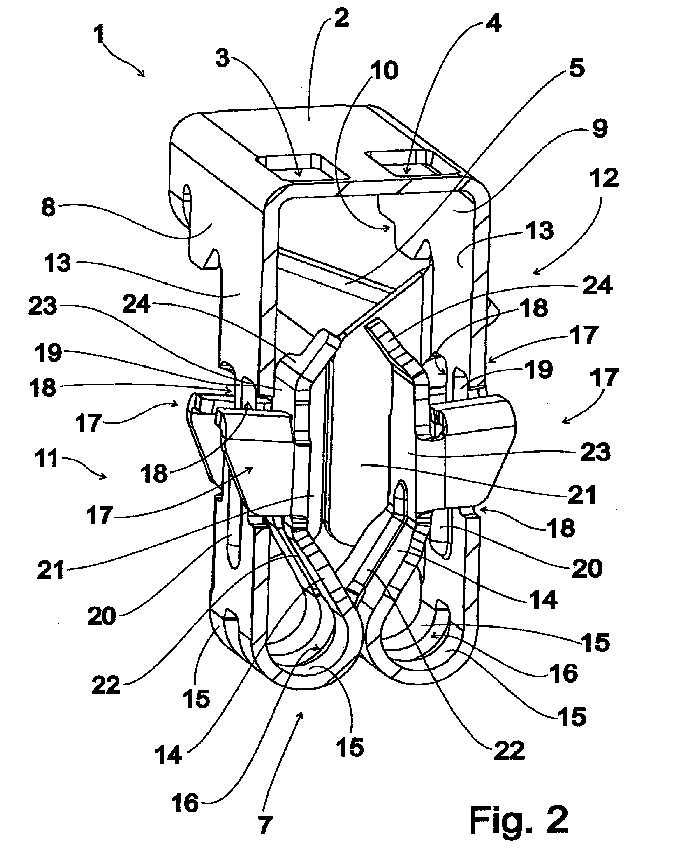

Fig. 2 zeigt in einem perspektivischen Längsschnitt das Ausführungsbeispiel gemäß Fig. 1 insbesondere mit Blick auf die Innenflügel 14. Aus Fig. 2 ist ersichtlich, dass die Innenflügel 14 in Verlängerung der Umbiegefreimachungen 16 jeweils mit einer Versteifungssicke 22 ausgebildet sind, um die Innenflügel 14 in ihrem dem Fußbereich 7 zugewandten Bereich zu versteifen. Weiterhin lässt sich Fig. 2 entnehmen, dass die Abstützwangen 17 über eine Umbiegung mit einem in etwa parallel zu den Außenflügeln 13 ausgerichteten Mittenabschnitt 23 mit den Innenflügeln 14 verbunden sind.

Jeder Innenflügel 14 weist weiterhin einen der Deckplatte 2 gegenüberliegenden Endabschnitt 24 auf, der gegenüber dem Mittenabschnitt 23 von dem Außenflügel 13 des betreffenden Schaftarmes 11, 12 wegweisend schräg abgewinkelt ist. Weiterhin lässt sich Fig. 2 entnehmen, dass die Endabschnitt 24 den Zugriffsausnehmungen 3, 4 gegenüberliegend angeordnet sind, so dass ein in Fig. 2 nicht dargestelltes Demontagewerkzeug durch die Zugriffsausnehmungen 3, 4 durchgreifen und auf die Endabschnitte 24 einwirken kann.

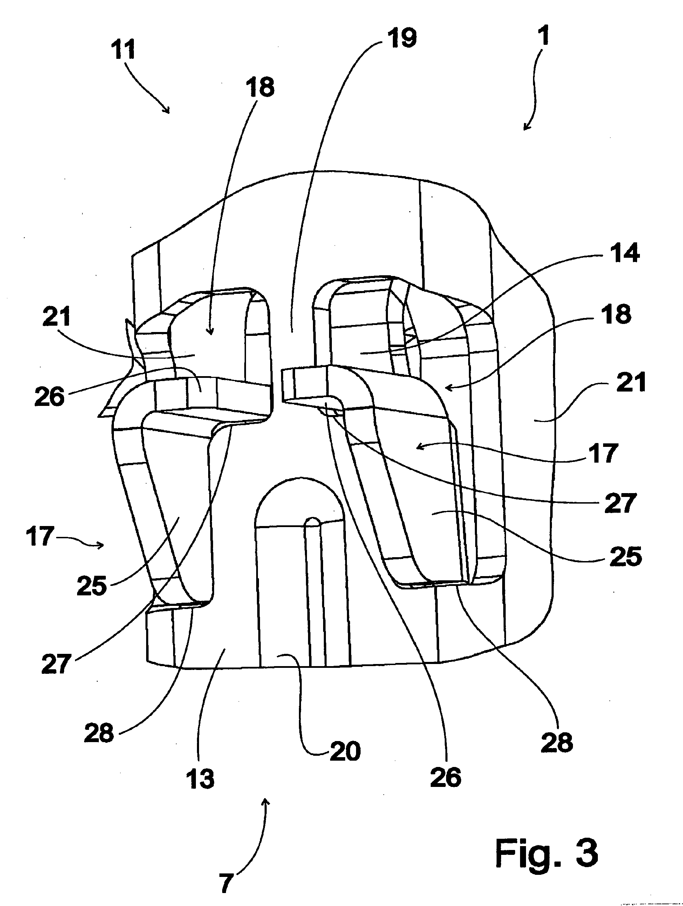

Fig. 3 zeigt in einer perspektivischen Detailansicht einen Schaftarm 11 des Ausführungsbeispieles gemäß Fig. 1 im Bereich der Abstützwangen 17 und der Abstützwangenfreimachungen 18. Aus Fig. 3 ist besonders deutlich ersichtlich, dass jede Abstützwange 17 aus einem sich seitlich in Längsrichtung des Schaftarmes 11 erstreckenden sowie an den Innenflügel 14 angebundenen Seitenabschnitt 25 und einem im Wesentlichen rechtwinklig zu dem Seitenabschnitt 25 ausgerichteten sowie über eine Abwinklung mit dem betreffenden Seitenabschnitt 25 verbundenen Anlageabschnitt 26 gebildet ist, die sich aufeinander zu bis nahe zu dem Mittensteg 19 erstrecken. Die von den Außenflügeln 13 abgewandten Außenkanten der Seitenabschnitte 25 sind in Richtung des Fußabschnittes 7 angeschrägt, um ein Einführen der Schaftarme 11, 12 durch an deren Querschnitt angepasste Montageausnehmungen mit relativ geringen Montagekräften zu ermöglichen.

Jeder Anlageabschnitt 26 liegt einer auf der dem Fußbereich 7 zugewandten Seite der Abstützwangenfreimachung 18 angeordneten Anlageabschnittstützkante 27 des Außenflügels 13 als Abstützkante unmittelbar gegenüber, so dass ein Umbiegen der Anlageabschnitte 26 in Richtung des Fußbereiches 7 blockiert ist. Die dem Fußbereich 7 zugewandten Randseiten der Seitenabschnitte 25 wiederum liegen in dem Fußbereich 7 zugewandten Ende der Abstützwangenfreimachungen 18 ausgebildeten Seitenabschnittstützkanten 28 als Abstützkanten gegenüber, so dass auch eine Bewegung der Seitenabschnitte 25 in Richtung des Fußbereiches 7 blockiert ist. Dadurch ist ein Nachgeben der Stützwangen 17 bei Ausüben einer hohen Auszugskraft auf das dargestellte und erläuterte Ausführungsbeispiel einer erfindungsgemäßen Befestigungsvorrichtung in einer weiter unten näher erläuterten bestimmungsgemäßen Montageanordnung wirkungsvoll verhindert.

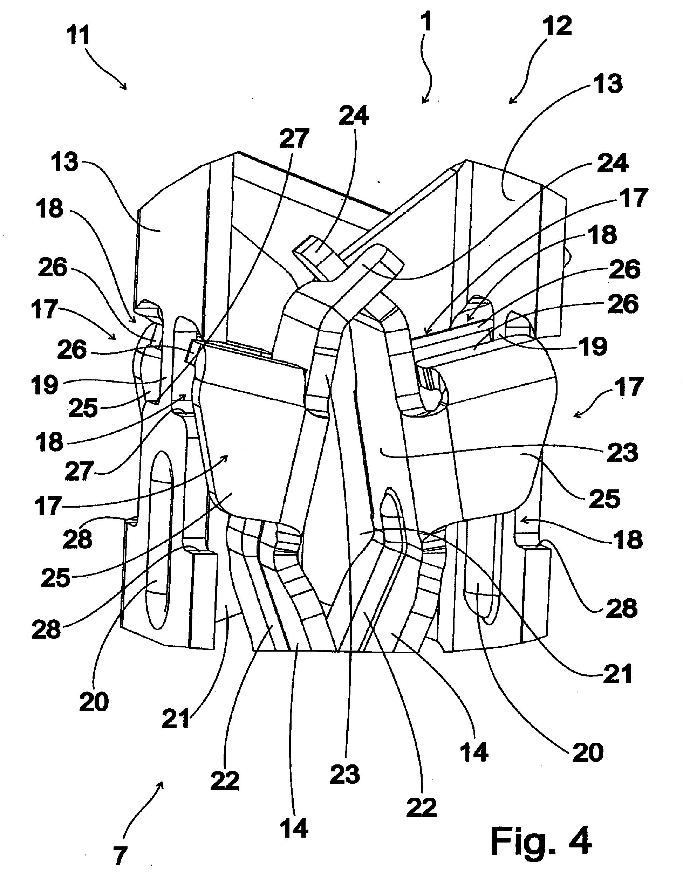

Fig. 4 zeigt in einer perspektivischen Detailansicht das Ausführungsbeispiel gemäß Fig. 1 im Bereich der Mittenabschnitte 23 und der Endabschnitte 24 der Innenflügel 14 in einer Endlage einer die Innenflügel 14 nach innen biegenden Biegebewegung, wie sie beispielsweise durch ein durch die Zugriffsausnehmungen 3, 4 eingeführtes und auf die Endabschnitte 24 einwirkendes Demontagewerkzeug, das in Fig. 4 nicht dargestellt ist, hervorgerufen ist.

In dieser Endlage sind die Abstützwangen 17 vollständig in die Abstützwangenfreimachungen 18 sowie in den zwischen den Außenflügeln 13 ausgebildeten Innenraum eingetreten, so dass die Schaftarme 11, 12 behinderungsfrei durch an den Querschnitt der Schaftarme 11, 12 angepasste Montageausnehmungen durchführbar sind. Durch eine zinkenartige Ausbildung der Endabschnitte 24 liegen die Endabschnitte 24 in der Endlage aneinander an und blockieren ein weiteres Aufeinander-Zu-Bewegen der Innenflügel 14 selbst bei durch das Demontagewerkzeug ausgeübten hohen Kräften. Die Abstützwangenfreimachungen 18 sind dabei in ihrem dem Kopfbereich 1 zugewandten Ende so ausreichend groß dimensioniert, dass einer Bewegung der Abstützwangen 17 nach innen in die Endlage gemäß Fig. 4 keinerlei Widerstand entgegengesetzt wird.

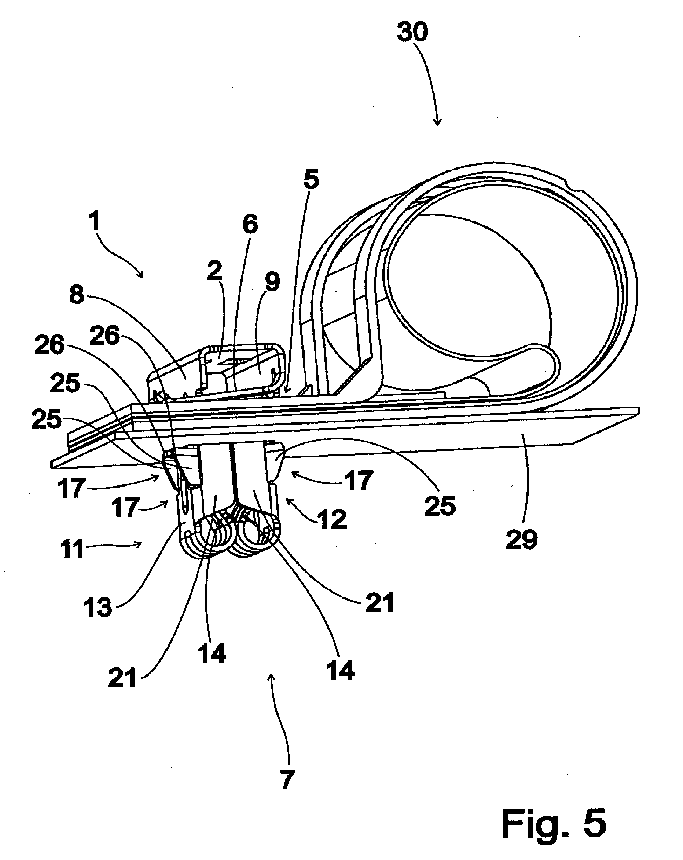

Fig. 5 zeigt das Ausführungsbeispiel einer erfindungsgemäßen Befestigungsvorrichtung gemäß Fig. 1 in einer bestimmungsgemäßen Montageanordnung, in der die Schaftarme 11, 12 durch in einem mechanisch hoch belastbaren Trägerteil 29 und in einem Anbauteil 30, hier in Gestalt einer Airbaganordnung, ausgebildete Montageausnehmungen durchgeführt ist. In der Montageanordnung hintergreifen die Anlageabschnitte 26 der Abstützwangen 17 das Trägerteil 29 auf seiner dem Anbauteil 30 abgewandten Seite, während die Federarme 5, 6 sowie gegebenenfalls die der Deckplatte 2 abgewandten Randseiten der Seitenwände 8, 9 an dem Anbauteil 30 aufliegen. Dadurch ist das Anbauteil 30 zuverlässig aber lösbar an dem Trägerteil 29 befestigt.

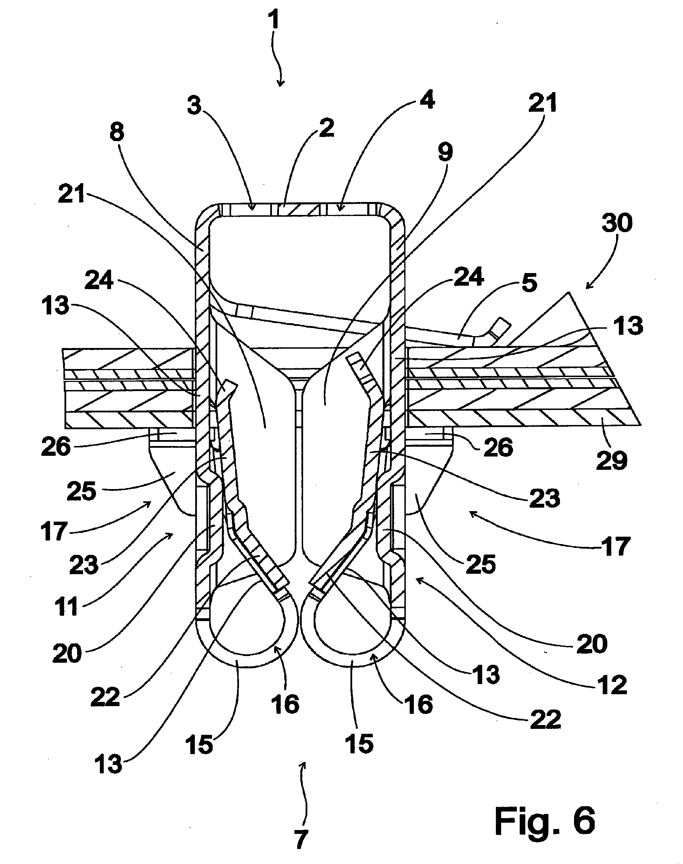

Fig. 6 zeigt in einem Längsschnitt das Ausführungsbeispiel einer erfindungsgemäßen Befestigungsanordnung gemäß Fig. 1 in der Montageanordnung gemäß Fig. 5. Aus Fig. 6 lässt sich deutlich entnehmen, dass die auf der jeweils gleichen Seite der Außenflügel 13 angeordneten Randflügel 21 bis auf einen verhältnismäßig schmalen Spalt dicht beieinander angeordnet sind, so dass ein Ausweichen der Außenflügel 13 nach innen bei Ausüben hoher Auszugskräfte blockiert ist. Desweiteren werden bei Ausüben hoher Auszugskräfte die Innenflügel 14 in Richtung der Außenflügel 13 ihres Schaftarmes 11, 12 bewegt, was den Hintergriff der Anlageabschnitte 26 der Abstützwangen 17 verstärkt. Auch die Umbiegeabschnitte 15 liegen in ihren an die Innenflügel 14 angrenzenden Endbereichen dicht beieinander an, was zu einer Versteifung im Fußbereich 7 führt.

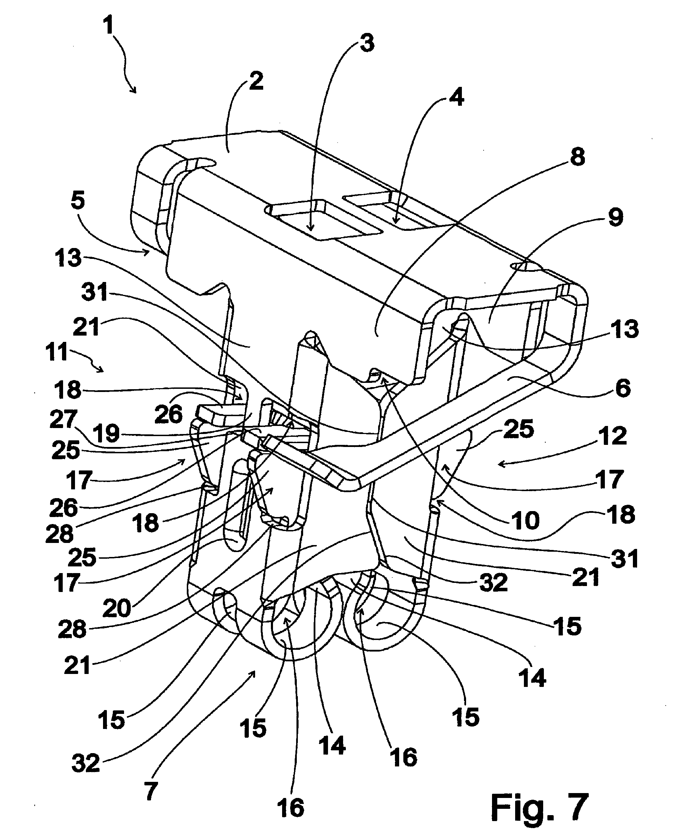

Fig. 7 zeigt in einer perspektivischen Ansicht ein weiteres Ausführungsbeispiel einer erfindungsgemäßen Befestigungsvorrichtung, wobei sich bei dem Ausführungsbeispiel gemäß Fig. 1 und bei dem weiteren Ausführungsbeispiel gemäß Fig. 7 einander entsprechende Elemente mit den gleichen Bezugszeichen versehen und zum Vermeiden von Wiederholungen zum Teil nicht nochmals näher erläutert sind. Bei dem weiteren Ausführungsbeispiel gemäß Fig. 7 sind die Randflügel 21 mit aufeinander zu weisenden Randkanten ausgebildet, die jeweils mit einem geraden langen ersten Teilabschnitt 31 und mit einem gegenüber dem ersten Teilabschnitt 31 abgewinkelt ausgerichteten kürzeren zweiten Teilabschnitt 32 ausgebildet sind. Die ersten Teilabschnitte 31 verlaufen dabei in Längsrichtung des Fußbereiches 7, während die zweiten Teilabschnitte 32 gegenüber der Längsrichtung des Fußbereiches 7 schräg abgewinkelt ausgerichtet sind. Dadurch werden die zweiten Teilabschnitte 32 bei Einwirkung einer der Einfügerichtung entgegen gesetzten Kraft aneinander gepresst. Die eingebrachte Kraft wird durch den sich dadurch erzielten Formschluss der zweiten Teilabschnitte 32 gleichmäßig auf die beiden Abstützwangen 17 und damit auf die beiden Schaftarme 11, 12 verteilt, wodurch einem Versagen einer der beiden Schaftarme 11, 12 durch eine nur einseitig eingebrachte Kraft entgegengewirkt wird.

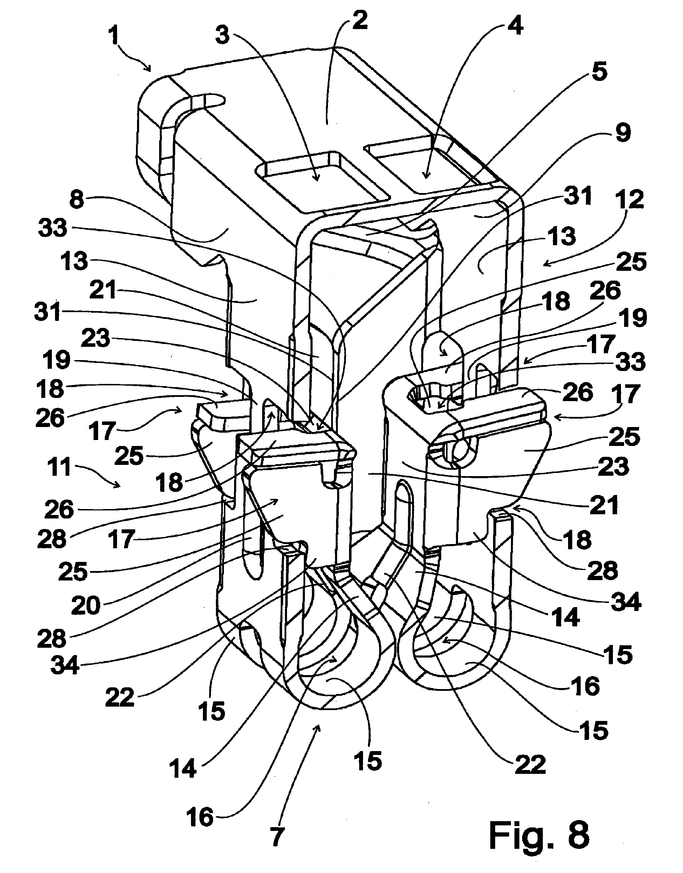

Fig. 8 zeigt in einer perspektivischen teilgeschnittenen Ansicht das weitere Ausführungsbeispiel gemäß Fig. 7. Aus Fig. 8 ist ersichtlich, dass bei dem weiteren Ausführungsbeispiel die Anlageabschnitte 26 an dem Mittenabschnitt 23 des betreffenden Innenflügels 14 des jeweiligen Schaftarmes 11, 12 durch Abwinklung angeformt sind und auf den der Deckplatte 2 zugewandten Randkanten der Seitenabschnitte 25 aufliegen. Die Innenflügel 14 weisen im Bereich der Abwinklung der Anlageabschnitte 26 im Endbereich der Mittenabschnitte 23 eine Eingriffsöffnung 33 auf, die in Längsrichtung des Fußbereiches 7 fluchtend mit jeweils einer Zugriffsausnehmung 3, 4 angeordnet sind. Des weiteren verfügen bei dem weiteren Ausführungsbeispiel die Seitenabschnitte 25 an ihren der Deckplatte 2 abgewandten Enden über einen Anschlagsabschnitt 34, der sich über die jeweilige Abschnittswangenfreimachung 18 hinaus von der Deckplatte 2 weg erstreckt und mit seiner radial nach außen weisenden Randkante dem jeweiligen Außenflügel 13 gegenüber liegt. Dadurch ist eine Bewegung der Innenflügel 14 und der Außenflügel 13 aufeinander zu blockiert.

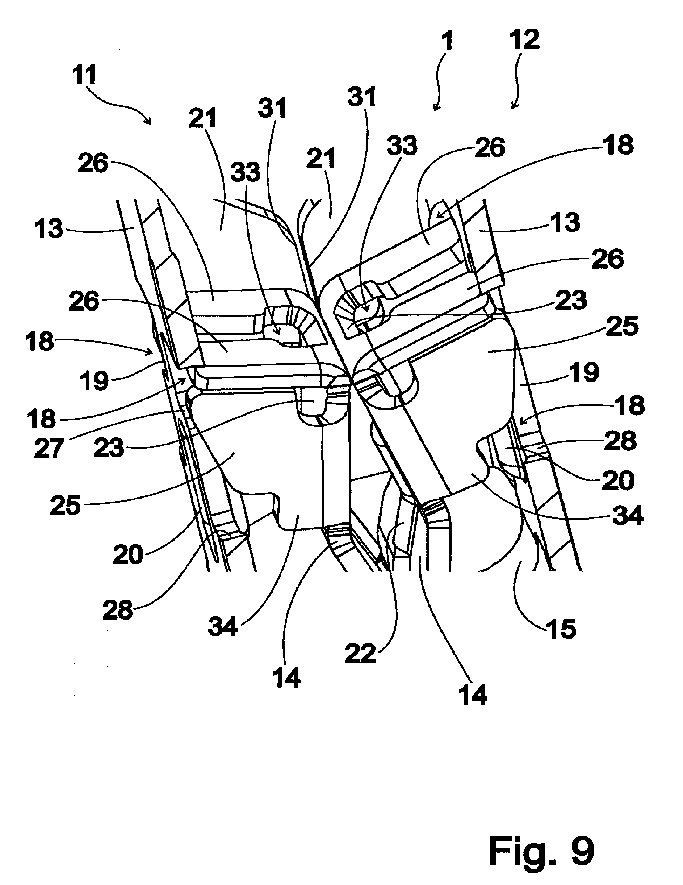

Fig. 9 zeigt in einer perspektivischen Detailansicht das weitere Ausführungsbeispiel gemäß Fig. 7 im Bereich der Mittenabschnitte 23 der Innenflügel 14 in einer Endlage einer die Innenflügel 14 radial nach innen biegenden Biegebewegung, wie sie beispielsweise durch ein durch die Zugriffsausnehmungen 3, 4 eingeführtes und in die Eingriffsöffnungen 33 eingeführtes Demontagewerkzeug, das in Fig. 9 nicht dargestellt ist, hervorgerufen ist. In dieser Endlage sind, wie bereits in Zusammenhang mit Fig. 4 erläutert, die Abstützwangen 17 vollständig in die Abstützwangenfreimachungen 18 sowie in den zwischen den Außenflügeln 13 ausgebildeten Innenraum eingetreten. Bei dem weiteren Ausführungsbeispiel liegen die Mittenabschnitte 23 im Bereich der Abknickungen zu den Anlageabschnitten 26 aneinander an und blockieren ein weiteres Aufeinander-Zu-Bewegen der Innenflügel 14 selbst bei durch das Montagewerkzeug ausgeübten hohen Kräften, wobei die Abknickungen hierbei stabilisierend wirken.

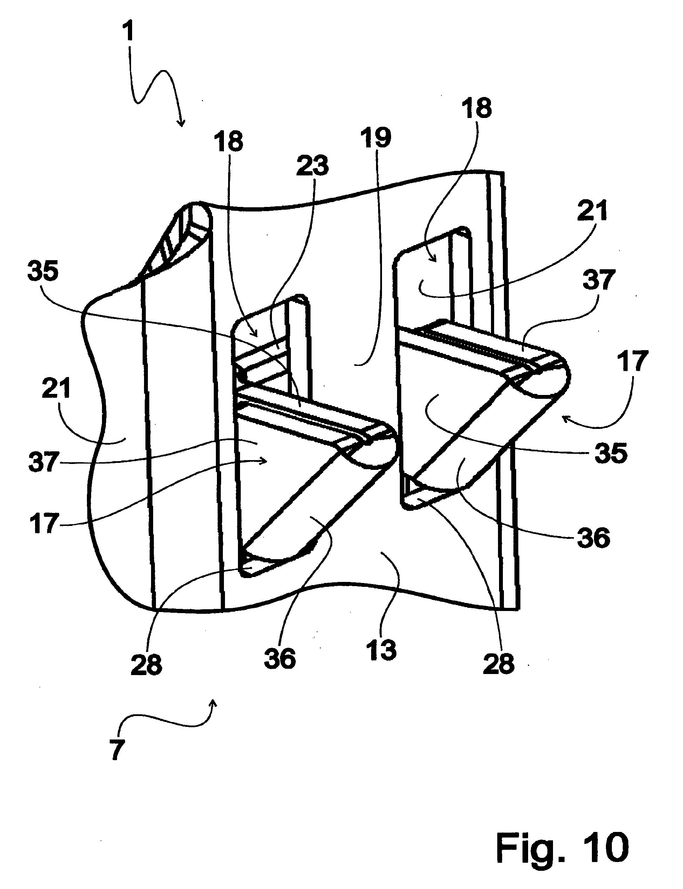

Fig. 10 zeigt in einer perspektivischen Detailansicht entsprechend Fig. 3 Abstützwangen 17 eines weiteren Ausführungsbeispieles, wobei sich bei den Ausführungsbeispielen gemäß Fig. 3 und Fig. 10 einander entsprechende Elemente mit den gleichen Bezugszeichen versehen und im weiteren zum Teil nicht nochmals näher erläutert sind. Bei dem weiteren Ausführungsbeispiel gemäß Fig. 10 weist jede Abstützwange 17 jeweils einen an den Mittenabschnitt 23 angeformten, innenseitig benachbart des Mittensteges 19 liegenden Anbindungsflügel 35 und einen über einen Verbindungsabschnitt 36 mit dem Anbindungsflügel 35 in Verbindung stehenden Endflügel 37 auf. Der Verbindungssteg 36 steht über den Außenflügel 13 nach außen vor und ist zum Erleichtern der Montage in Richtung des Fußbereiches 7 angeschrägt. Die Endflügel 37 liegen auf der dem Mittensteg 19 abgewandten Seite des jeweiligen Anbindungsflügel 35 und sind parallel zu dem jeweiligen Anbindungsflügel 35 ausgerichtet, wobei sie zum Anliegen an die Seitenabschnittsabstützkanten 28 in die Abstützwangenfreimachungen 18 eintauchen.

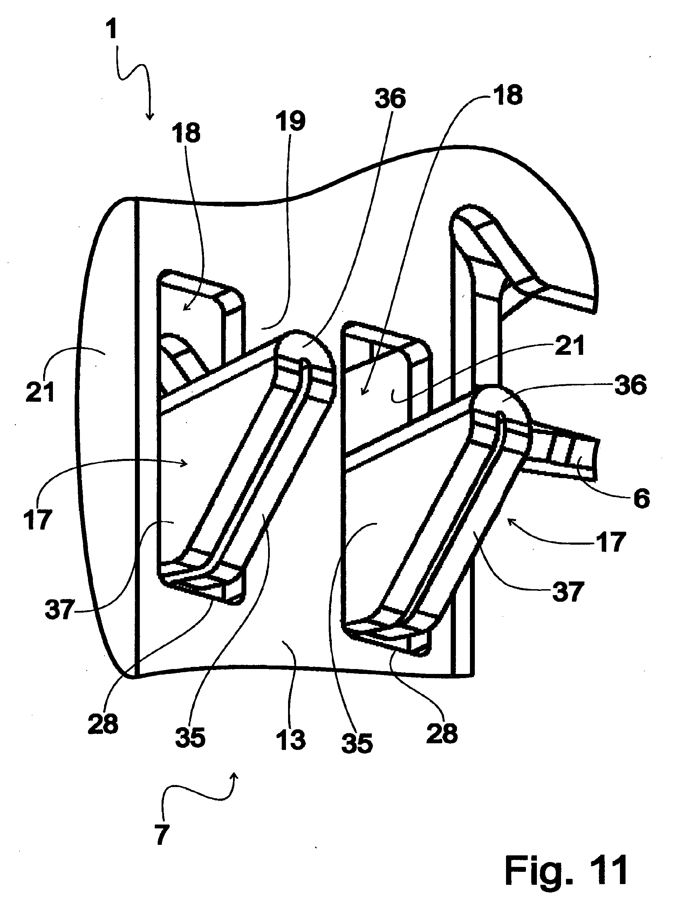

Fig. 11 zeigt in einer perspektivischen Detailansicht entsprechend Fig. 3 Abstützwangen 17 noch eines weiteren Ausführungsbeispieles, wobei sich bei den Ausführungsbeispielen gemäß Fig. 3, Fig. 10 und Fig. 11 einander entsprechende Elemente mit den gleichen Bezugszeichen versehen und im weiteren zum Teil nicht nochmals näher erläutert sind. Bei dem noch weiteren Ausführungsbeispiel gemäß Fig. 11 sind in Abwandlung zu dem weiteren Ausführungsbeispiel gemäß Fig. 10 liegen bei jeder Abstützwange 17 die Verbindungsabschnitte 36 auf der dem Kopfbereich 1 zugewandten Seite der Anbindungsflügel 35 und sind rechtwinklig zu dem Außenflügeln 13 ausgerichtet, während zum Erleichtern der Montage die nach außen weisenden Seiten der Anbindungsflügel 35 und Endflügel 37 in Richtung des Fußbereiches 7 angeschrägt sind.

## Patentansprüche

1. Befestigungsvorrichtung zum Befestigen eines Anbauteiles (30) an einem Trägerteil (29) mit einer in einem Kopfbereich (1) angeordneten flachen Deckplatte (2) und mit zwei Schaftarmen (11, 12), die mit der Deckplatte (2) verbunden sind und die sich von der Deckplatte (2) weg in Richtung eines Fußbereiches (7) erstrecken, wobei jeder Schaftarm (11, 12) einen Außenflügel (13) und einen Innenflügel (14) aufweist, wobei an jedem Innenflügel (14) eines Schaftarmes (11, 12) durch in dem Außenflügel (13) des betreffenden Schaftarmes (11, 12) ausgebildete Abstützwangenfreimachungen (18) durchgreifende Abstützwangen (17) angeformt sind, und wobei an jedem Außenflügel (13) jedes Schaftarmes (11, 12) zwei Randflügel (21) angeformt sind, die sich aufeinander zu erstrecken, **dadurch gekennzeichnet, dass** an der Deckplatte (2) Seitenwände (8, 9) angeformt sind, die mit der Deckplatte (2) ein U-förmiges Profil bilden, dass jeder Außenflügel (13) an einer Seitenwand (8, 9) angeformt ist, und dass sich die Randflügel (21) beidseitig der Abstützwangenfreimachungen (18) erstrecken.

2. Befestigungsvorrichtung nach Anspruch 1, **dadurch gekennzeichnet, dass** die aufeinander zu weisenden Randseiten der Randflügel (21) gerade sind und aneinander angrenzen.

3. Befestigungsvorrichtung nach Anspruch 1, **dadurch gekennzeichnet, dass** die aufeinander zu weisenden Randseiten der Randflügel (21) zwei winklig zueinander ausgerichtete gerade Teilabschnitte (31, 32) aufweisen und aneinander angrenzen.

4. Befestigungsvorrichtung nach einem der Ansprüche 1 bis 3, **dadurch gekennzeichnet, dass** die Abstützwangen (17) L-artig jeweils mit einem parallel zu der Deckplatte (2) ausgerichteten Anlageabschnitt (26) und mit einem rechtwinklig zu dem Anlageabschnitt (26) ausgerichteten Seitenabschnitt (25) ausgebildet sind.

5. Befestigungsvorrichtung nach Anspruch 4, **dadurch gekennzeichnet, dass** jeder Anlageabschnitt (26) durch Abwinklung an einen Seitenabschnitt (25) angeformt ist.

6. Befestigungsvorrichtung nach Anspruch 4, **dadurch gekennzeichnet, dass** jeder Anlageabschnitt (26) durch Abwinklung an einen Mittenabschnitt (23) eines Innenflügels (14) angeformt ist.

7. Befestigungsvorrichtung nach einem der Ansprüche 4 bis 6, **dadurch gekennzeichnet, dass** die Seitenabschnitte (25) auf der dem Anlageabschnitt (26) gegenüber liegenden Seite einen dem Außenflügel (13) gegenüber liegenden Anschlagsabschnitt (34) aufweisen.

8. Befestigungsvorrichtung nach einem der Ansprüche 4 bis 7, **dadurch gekennzeichnet, dass** jeder Außenflügel (13) Abstützkanten (27, 28) aufweist, die den Anlageabschnitten (26) und den Seitenabschnitten (25) auf deren der Deckplatte (2) abgewandten Seite gegenüberliegen.

9. Befestigungsvorrichtung nach einem der Ansprüche 1 bis 3, **dadurch gekennzeichnet, dass** jede Abstützwange (17) jeweils einen an einem Mittenabschnitt (23) angeformten Anbindungsflügel (35) und einen über einen Verbindungsabschnitt (36) mit dem Anbindungsflügel (35) verbundenen Endflügel (37) aufweist, wobei der Anbindungsflügel (35) und der Endflügel (37) jeder Abstützwange (17) parallel zueinander ausgerichtet sind.

10. Befestigungsvorrichtung nach Anspruch 9, **dadurch gekennzeichnet, dass** der Verbindungsabschnitt (36) von dem jeweiligen Außenflügel (13) weg nach außen weisend und schräg in Richtung des Fußbereiches (7) ausgerichtet ist.

11. Befestigungsvorrichtung nach Anspruch 9, **dadurch gekennzeichnet, dass** der Verbindungsabschnitt (36) in Richtung des Kopfbereiches (1) weisend und rechtwinklig zu den Außenflügeln (13) ausgerichtet ist.

12. Befestigungsvorrichtung nach einem der Ansprüche 1 bis 11, **dadurch gekennzeichnet, dass** an der Deckplatte (2) sich schräg von der Deckplatte (2) wegweisend in Richtung des Fußbereiches (7) erstreckende Federarme (5, 6) angeformt sind.

13. Befestigungsvorrichtung nach einem der Ansprüche 1 bis 12, **dadurch gekennzeichnet, dass** jeder Innenflügel (14) an seinem der Deckplatte (2) zugewandten Ende einen Endabschnitt (24) aufweist, der gegenüberliegend einer in der Deckplatte (2) ausgebildeten Zugriffsausnehmung (3, 4) angeordnet ist.

14. Befestigungsvorrichtung nach Anspruch 13, **dadurch gekennzeichnet, dass** die Endabschnitte (24) der Innenflügel (14) in einer Endlage aneinander anliegen, um eine weitere Bewegung der Innenflügel (14) aufeinander zu blockieren.

15. Befestigungsvorrichtung nach einem der Ansprüche 1 bis 12, **dadurch gekennzeichnet, dass** in jedem Innenflügel (14) wenigstens eine Eintrittsöffnung (33) ausgebildet ist, der gegenüberliegend einer in der Deckplatte (2) ausgebildeten Zugriffsausnehmung (3, 4) angeordnet ist.

16. Befestigungsvorrichtung nach einem der Ansprüche 1 bis 15, **dadurch gekennzeichnet, dass** die Außenflügel (13) und/oder die Innenflügel (14) Versteifungssicken (20, 22) aufweisen.

17. Befestigungsvorrichtung nach einem der Ansprüche 1 bis 16, **dadurch gekennzeichnet, dass** zwischen dem Außenflügel (13) und dem Innenflügel (14) eines Schaftarmes (11, 12) zwei Umbiegeabschnitte (15) ausgebildet sind, zwischen denen jeweils eine Umbiegefreimachung (16) ausgebildet ist.

## Claims

1. Fastener for fastening an added part (30) to a carrying part (29), having a flat top plate (2) arranged in a head region (1) and having two shank limbs (11, 12) which are connected to the top plate (2) and which extend away from the top plate (2) in the direction of a foot region (7), each shank limb (11, 12) having an outer stem (13) and an inner stem (14), with each inner stem (14) of a shank limb (11, 12) having integrally formed on it supporting cheek-pieces (17) which pass through apertures (18) for the supporting cheek-pieces (17) made in the outer stem (13) of the shank limb (11, 12) concerned, and there being integrally formed on each outer stem (13) of each shank limb (11, 12) two edge tabs (21), which pairs of edge tabs (21) extend towards one another, **characterised in that** there are integrally formed on the top plate (2) side-walls (8, 9) which form a U-profile with the top plate (2), **in that** each outer stem (13) is integrally formed on a sidewall (8, 9), and **in that** the edge tabs (21) extend on the two sides of the apertures (18) for the supporting cheek-pieces (17).

2. Fastener according to claim 1, **characterised in that** those edges of the edge tabs (21) which face towards one another are straight and adjoin one another.

3. Fastener according to claim 1, **characterised in that** those edges of the edge tabs (21) which face towards one another have two straight sub-portions (31, 32) orientated at an angle to one another and adjoin one another.

4. Fastener according to one of claims 1 to 3, **characterised in that** the supporting cheek-pieces (17) are of an L-like form, each having a portion for contact (26) aligned parallel to the top plate (2) and a side-portion (25) aligned at right angles to the portion for contact (26).

5. Fastener according to claim 4, **characterised in that** each portion for contact (26) is integrally formed on a side-portion (25) by bending to an angle.

6. Fastener according to claim 4, **characterised in that** each portion for contact (26) is integrally formed on a central portion (23) of an inner stem (14) by bending to an angle.

7. Fastener according to one of claims 4 to 6, **characterised in that** the side-portions (25) have, on the opposite side from the portion for contact (26), a portion for abutment (34) which is situated opposite the outer stem (13).

8. Fastener according to one of claims 4 to 7, **characterised in that** each outer stem (13) has supporting edges (27, 28) which are situated opposite the portions for contact (26) and the side-portions (25), on the sides of the latter remote from the top plate (2).

9. Fastener according to one of claims 1 to 3, **characterised in that** each supporting cheek-piece (17) has a linking web (35) integrally formed on a central portion (23) and a terminal web (37) which is connected to the linking web (35) by a connecting portion (36), with the linking web (35) and the terminal web (37) of each supporting cheek-piece (17) being aligned parallel to one another.

10. Fastener according to claim 9, **characterised in that** the connecting portion (36) is aligned to face outwards away from the given outer stem (13) and is obliquely aligned in the direction of the foot region (7).

11. Fastener according to claim 9, **characterised in that** the connecting portion (36) is aligned to face in the direction of the head region (1) and is aligned at right angles to the outer stems (13).

12. Fastener according to one of claims 1 to 11, **characterised in that** resilient arms (5, 6) which extend obliquely to point away from the top plate (2) in the direction of the foot region (7) are integrally formed on the top plate (2).

13. Fastener according to one of claims 1 to 12, **characterised in that** each inner stem (14) has, at its end adjacent the top plate (2), a terminal portion (24) which is arranged opposite an access aperture (3, 4) formed in the top plate (2).

14. Fastener according to claim 13, **characterised in that**, in an end position, the terminal portions (24) of the inner stems (14) bear against one another to block any further movement of the inner stems (14) towards one another.

15. Fastener according to one of claims 1 to 12, **characterised in that** there is formed in each inner stem (14) an entry opening (33) which is arranged opposite an access aperture (3, 4) formed in the top plate (2).

16. Fastener according to one of claims 1 to 15, **characterised in that** the outer stems (13) and/or the inner stems (14) have stiffening ridges (20, 22).

17. Fastener according to one of claims 1 to 16, **characterised in that** there are formed between the outer stem (13) and inner stem (14) of a shank limb (11, 12) two folded-round portions (15) between which a curved-round aperture (16) is formed.

## Revendications

1. Dispositif de fixation pour fixer un élément rapporté (30) sur un élément faisant office de support (29), comprenant une plaque de recouvrement supérieure plate (2) disposée dans une portion de tête (1) et comprenant deux pattes formant corps (11, 12) qui sont reliées à la plaque de recouvrement supérieure (2) et qui, partant de la plaque de recouvrement supérieure (2), s'étendent dans la direction d'une zone de pied (7), dans lequel chaque patte formant corps (11, 12) comporte en l'occurrence une ailette extérieure (13) et une ailette intérieure (14), dans lequel, sur chaque ailette intérieure (14) d'une patte formant corps (11, 12) des portées d'appui continues (17) sont réalisées solidaires par formage par des dégagements pour portée d'appui (18) ménagés dans l'ailette extérieure (13) de la patte formant corps (11, 12) concernée et dans lequel chaque ailette extérieure (13) de chaque patte formant corps (11, 12) est munie de deux ailettes de rive (21) réalisées solidaires par formage, qui s'étendent orientées l'une vers l'autre, **caractérisé en ce que** la plaque de recouvrement supérieure (2) comporte des parois latérales (8, 9) réalisées solidaires de celle-ci par formage, qui définissent, avec la plaque de recouvrement supérieure (2), une structure en forme d'étrier, **en ce que** chaque ailette extérieure (13) est réalisée solidaire par formage d'une paroi latérale (8, 9) et **en ce que** les ailettes de rive (21) s'étendent de part et d'autre des dégagements pour portées d'appui (18).

2. Dispositif de fixation selon la revendication 1, **caractérisé en ce que** les bords latéraux des ailettes de rive (21), se faisant respectivement face, sont rectilignes et sont respectivement contigus.

3. Dispositif de fixation selon la revendication 1, **caractérisé en ce que** les bords latéraux des ailettes de rive (21), respectivement orientés l'un vers l'autre, comportent deux portions partielles rectilignes (31, 32) orientées l'une vers l'autre selon une disposition angulaire et sont contigus

4. Dispositif de fixation selon l'une des revendications 1 à 3, **caractérisé en ce que** les portées d'appui (17) sont réalisées selon une configuration en L respectivement constituée par une portion formant portée d'assise (26) orientée parallèlement à la plaque de recouvrement supérieure (2) et par une portion latérale (25) orientée selon une disposition en angle droit par rapport à la portion formant portée d'assise (26).

5. Dispositif de fixation selon la revendication 4, **caractérisé en ce que** chaque portion formant portée d'assise (26) est réalisée par pliage solidaire d'une portion latérale (25).

6. Dispositif de fixation selon la revendication 4, **caractérisé en ce que** chaque portion formant portée d'assise (26) est réalisée par pliage solidaire d'une portion centrale (23) d'une ailette intérieure (14).

7. Dispositif de fixation selon l'une des revendications 4 à 6, **caractérisé en ce que** les portions latérales (25) comportent, sur leur côté opposé à la portion formant portée d'assise (26), une portion faisant office de butée disposée à l'opposé de l'ailette extérieure (13).

8. Dispositif de fixation selon l'une des revendications 4 à 7, **caractérisé en ce que** chaque ailette extérieure (13) est munie d'arêtes d'appui (27, 28) qui sont disposées à l'opposé des portions formant portées d'assise (26) et des portions latérales (25) sur leur côté allant en s'écartant de la plaque de recouvrement supérieure (2).

9. Dispositif de fixation selon l'une des revendications 1 à 3, **caractérisé en ce que** chaque portée d'appui (17) comporte respectivement une ailette de jonction (35) réalisée par formage solidaire d'une portion médiane (23) et une ailette d'extrémité (37) reliée par l'intermédiaire d'une portion de raccordement (36) à l'ailette de jonction (35), l'ailette de jonction (35) et l'ailette d'extrémité (37) de chaque portée d'appui (17) étant en l'occurrence orientées parallèlement l'une à l'autre.

10. Dispositif de fixation selon la revendication 9, **caractérisé en ce que** la portion de raccordement (36) en partant de chaque ailette extérieure respective (13) va en s'écartant vers l'extérieur et est orientée selon une disposition oblique dans la direction de la zone de pied (7).

11. Dispositif de fixation selon la revendication 9, **caractérisé en ce que** la portion de raccordement (36) est orientée dans la direction de la portion de tête (1) et selon une disposition en angle droit par rapport aux ailettes extérieures (13).

12. Dispositif de fixation selon l'une des revendications 1 à 11, **caractérisé en ce que**, partant de la plaque de recouvrement supérieure (2), des pattes élastiques (5, 6) sont réalisées solidaires par formage de la plaque de recouvrement supérieure (2) en s'étendant selon une trajectoire oblique dans la direction de la zone de pied (7).

13. Dispositif de fixation selon l'une des revendications 1 à 12, **caractérisé en ce que** chaque ailette intérieure (14) comporte, au niveau de son extrémité orientée en direction de la plaque de recouvrement supérieure (2), une portion d'extrémité (24), qui est disposée à l'opposé d'un évidement de préhension (3, 4) ménagé dans la plaque de recouvrement supérieure (2).

14. Dispositif de fixation selon la revendication 13, **caractérisé en ce que** les portions d'extrémité (24) des ailettes intérieures (14) sont respectivement adjacentes dans une position finale pour empêcher ainsi les ailettes intérieures (14) de se rapprocher plus avant l'une de l'autre.

15. Dispositif de fixation selon l'une des revendications 1 à 12, **caractérisé en ce qu'**il est prévu, dans chaque ailette intérieure (14), au moins une ouverture d'entrée (33) qui est disposée à l'opposé d'un évidement de préhension (3, 4) ménagé dans la plaque de recouvrement supérieure (2).

16. Dispositif de fixation selon l'une des revendications 1 à 15, **caractérisé en ce que** les ailettes extérieures (13) et/ou les ailettes intérieures (14) sont munies de moulures de renforcement (20, 22).

17. Dispositif de fixation selon l'une des revendications 1 à 16, **caractérisé en ce qu'**il est prévu, entre l'ailette extérieure (13) et l'ailette intérieure (14) d'une patte formant corps (11, 12), deux portions recourbées (15), entre lesquelles un dégagement sur portion cintrée (16) est respectivement ménagé.
